# EUROPEAN PATENT SPECIFICATION

(11) **EP 0 584 160 B1**
(45) Date of publication and mention of the grant of the patent: **06.11.1996**
(21) Application number: 92910237.4
(22) Date of filing: 14.05.1992
(51) Int. Cl.: A62B 23/00, A62B 23/02

(54) **FILTER**
FILTER
FILTRE

(30) Priority: 14.05.1991 AU PK6124/91
(43) Date of publication of application: 02.03.1994
(73) Proprietor: PURECAB (AUSTRALIA) PTY. LTD., Paradise, S.A. 5075 (AU)
(72) Inventor: VAN'T OOSTEN, James, Para Vista, S.A. 5093 (AU)
(74) Representative: Fisher, Adrian John
(86) International application number: AU9200214
(87) International publication number: WO9220406

(56) References cited:
- EP-A- 0 159 697
- EP-A- 0 159 698
- EP-A- 0 188 853
- EP-A- 0 294 707
- AU-B- 7 388 581
- FR-A- 2 550 947
- GB-A- 511 258
- GB-A- 2 168 259
- US-A- 1 725 893
- US-A- 3 966 440

## Description

This invention relates to a filter for use in an airflow passageway.

A difficulty arises where air for human or animal inhalation or for any other purpose is contaminated with toxic or harmful chemicals, and an area in which a human or animal is to breathe is to be kept free of such toxic or harmful chemicals. The area in which a human is to breathe may be a cabin of a tractor or other vehicle or it may be the space inside a gas mask. Alternatively a situation might exist where air in a chamber in which an animal is kept or a machine is operated might gradually become polluted so that air may need to be recirculated through a filter to keep it suitable for its intended purpose.

Adsorptive bed based filters have been used to deal with such pollutants and toxic materials with a base such as a chemisorptive agent reactive with a broad range of pollutants or a narrow range of pollutants. A difficulty with such an adsorptive bed is that toxic materials or other pollutants carried on particulate materials are not effectively adsorbed, and thus can pass through such filters and through to the inside of a protected space such as a cabin. Furthermore, particles of larger size have a tendency to clog up the adsorptive bed.

EP-A-0188853 discloses a filter unit for a crematorium. The filter unit has a mechanical filter, an electrostatic or an electret filter and a chemisorptive filter.

EP-A-0159697 and EP-A-0159698 disclose a filter unit having in sequence a mechanical filter, a chemisorptive filter and an electret filter.

It has been found that the provision of a prefilter based on mechanical filtration is not adequate to overcome the above problem with absorptive beds. A difficulty found in providing a filter medium with a pore size that is fine enough to filter out a majority of particulate matter, is that the flow rate of air through the system is considerably reduced. Some other form of filtration is also necessary.

A further difficulty with the use of filters relying on exhaustible media such as chemisorptive media is that such filters become ineffective after an amount of use. Firstly the rate of absorption decreases, and eventually some exchange occurs between the absorbed material and the surrounding milieu so that the chemisorptive medium itself becomes a source of the undesirable and/or toxic material being transfered back into the air.

Consideration of the time at which filters should be disposed becomes especially critical where the filter is designed for personal use, for example in respiratory masks as are used by workers when working with toxic chemicals. Such masks have a filter based on a chemisorptive layer, however, at present commercially available masks have no means of indicating whether the chemisorptive layer has become ineffective other than by the sensory perception of the wearer. Thus if the wearer tastes the toxic chemical or feels dizzy then the filter should be replaced. Under many circumstances such a practice is quite unsafe, or alternatively filters are disposed of at an inappropriately early stage to be safe.

It is an object of this invention to provide a filter that is effective in filtering a range of toxic materials so that it alleviates or minimises one or more problems associated with existing filters or at least to provide the public with a useful choice.

It is a further object of this invention to provide for a means to determine the extent to which an exhaustable medium in a bed a filter arrangement has been depleted so that it obviates or minimizes any one of the foregoing disadvantages in a simple yet effective manner or at least provide the public with a useful choice.

The invention could thus be said to reside in an air filter for filtering air passing through a flow path, including the following sequential filtering layers in the flow path, a mechanical filter, a combined electrostatic and an electret medium and a chemisorptive medium, the layers being so arranged that air passing through the air filter passes through each of the filtering layers.

The combined electrostatic and electret medium provides effective filtering of particulate material both charged and uncharged, so that the actual physical pore size can be quite large compared with the effective pore size. An electrostatic layer by itself is found unsatisfactory for use in many applications because uncharged particles can pass through the layer. Such a combined electrostatic and electret medium is, however, not found to be effective unless some mechanical prefiltering is also effected as is discussed above with the mechanical prefilter.

In a preferred form of the invention the chemisorptive medium is contained within a chemisorptive chamber between two opposing walls being lateral to the flow path and being perforated to allow for through-flow of air whilst retaining the chemisorptive material within the chamber. It is found preferable to have perforations in the two opposing wall set at an angle to the throughflow of air. Such an arrangement provides for a more effective means of mixing the air with the chemisorptive material so as to enhance the effectiveness of the chemisorptive process.

In one form the perforations in the opposing walls are provided by a web of expanded metal, as a convenient means of effectively providing such perforations.

A further problem with such an arrangement is that such expanded metal walls are not rigid in a direction lateral to the plane of the walls, and thus such walls flex. This flexing causes the chemisorption chamber to increase in size. Thus the chemisorptive medium may not fully fill the chamber, leaving a space that allows for through flow of air without contacting the chemisorptive medium. In a preferable form then the chemisorption chamber includes means to inhibit movement of the two opposing walls in the direction of airflow.

In a preferable form this means to inhibit movement can be provided by a post extending between the two opposing walls and having a flange fixed to the post and bracing against both faces of each surface of the two opposing walls so as to maintain a fixed distance between the two walls.

Chemisorptive media diminishes in effectiveness with use and time and eventually becomes exhausted requiring replacement or reactivation. Many chemisorptive media have an indicator which allows a quick determination of whether the medium is no longer active. Frequently a colour change of the medium is used as such an indicator. A difficulty where such chemisorptive material is held within a chamber is that it is difficult to determine whether such chemisorptive material is exhausted or not.

In a preferred form the chemisorptive medium includes an indicator of its activation state, and said chemisorptive chamber includes a window, for visual inspection of the colour change of the chemisorptive medium. The provision of this window provides for a very quick means of determining the usefulness of the chemisorptive medium and hence the filter.

The chemisorptive medium might be an activated alumina which is impregnated with potassium permanganate as an indicator. The colour of the indicator in the activated alumina granules can be compared against a colour chart to determine the extent of depletion of capacity of the chemisorptive bed. The colour chart may be fixed on the outside of a casing enclosing the filter to enable easy checking of the state of the indicator in the chemisorptive medium.

In a preferred form the visual display may be provided by a material that undergoes a colour change which colour change is detectable at least at a predetermined level of remaining capacity of the exhaustable medium.

In a preferred form the chemisorptive chamber may include an indicator region, which indicator region includes an indicator exhaustable medium and an indicator indicative of the capacity of the indicator exhaustible medium, and an active region which active region includes an active exhaustible medium, a window being provided for visual inspection of the indicator exhaustible medium, the indicator being provided to show the absorptive capacity of the indicator exhaustable medium, and the absorptive capacity of the active exhaustible medium being greater than that of the indicator exhaustible medium.

In a preferred form the indicator exhaustable medium is separate from the active region and exposed to the airflow through the filter, and adjacent to the filter casing, with a window provided through the casing to the indicator chamber.

In a preferred form the indicator region comprises a layer extending across a flowpath and being positioned upstream of the active region.

In an alternative form the invention may be said to reside in a respiratory mask, comprising a filter including a bed of exhaustible medium for neutralizing or reacting with a filterable element and a visually detectable indicator to indicate the level of remaining capacity of the exhaustible medium, at least at one predetermined level and a window to allow for inspection of the indicator for the exhaustible medium.

In a further form the invention may be said to reside in a replaceable filter for a respiratory mask, comprising a filter including a bed of a chemisorptive medium for neutralizing or reacting with a filterable element and a visually detectable indicator to indicate the level of remaining capacity of the exhaustible medium, at least at one predetermined level and a window to allow for inspection of the indicator for the exhaustible medium.

For a better understanding the invention will now be described with reference to the accompanying drawings wherein:
FIG. 1 is a cross sectional view of a filter unit housing of a first embodiment of the invention showing the size of the chemisorptive bed relative to the size of the housing holding the mechanical, electret and electrostatic media,
FIG. 2 is a cut-away view of the housing for the first embodiment, showing in particular the chemisorption chamber and flanged post to support the opposed perforated walls in fixed relative position,
FIG. 3 is a cross sectional part schematic view of the first embodiment of the invention showing the filter layers,
FIG. 4 is a cross-sectional view through lines IV-IV of FIG. 3 showing the location of an indicator chamber within the chemisorptive chamber together with an inspection window,
FIG. 5 is a cross-sectional view of a second embodiment of the invention wherein the filter is generally cylindrical in shape,
FIG. 6 is a perspective view of the second embodiment of the invention,
FIG. 7 is a part schematic view of the position of the first embodiment of the invention in a tractor cabin,
FIG. 8 is a cross sectional part schematic view of a filter unit housing according to another embodiment of the invention,
FIG. 9 is a cross sectional part schematic view of an alternative filter unit of the invention,
FIG. 10 is a cross sectional part schematic view of an alternative filter unit of the invention, and
FIG. 11 is a cross sectional part schematic view of an alternative filter unit of the invention.

Similar reference characters indicate corresponding parts throughout the several views of the drawings.

Dimensions of certain of the parts as shown in the drawings may have been modified and/or exaggerated for the purposes of clarity of illustration.

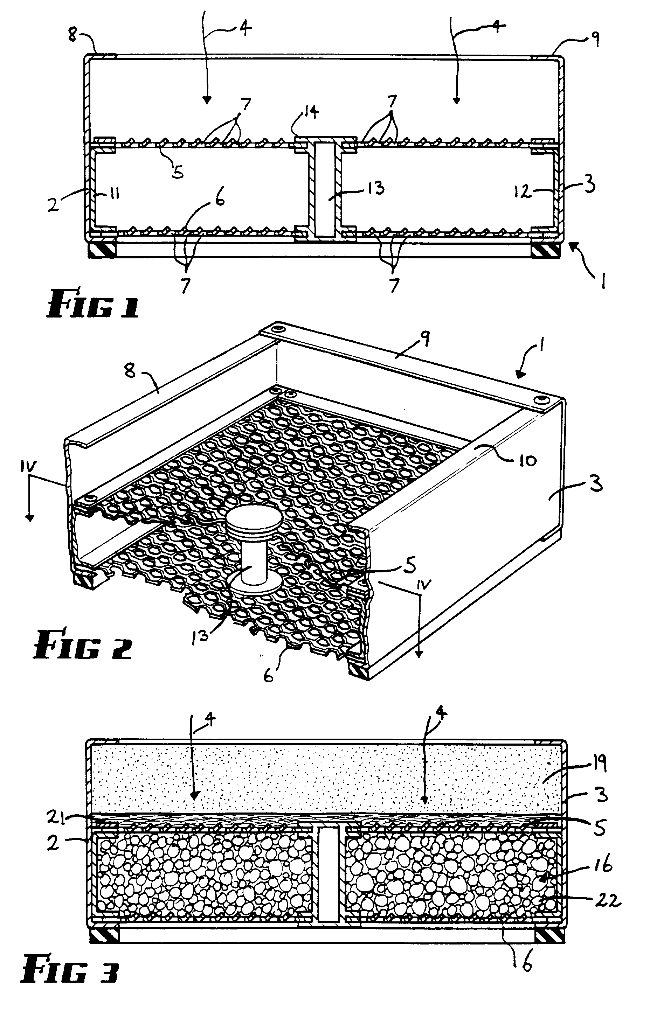

The filter shown in FIGS. 1, 2, 3, 4, and 7 includes a generally rectangular filter housing 1 including two side walls 2 and 3 extending along the length of filter. At either ends are end walls, one of which is seen best in FIG. 2. The end walls and side walls provide an elongate sealed passageway of rectangular cross section for air flow in the direction shown by arrows 4. Supported within the air passageway are two webs of expanded metal 5 and 6; perforations 7 within such expanded webs permit air to flow therethrough. The housing in this embodiment is made of aluminium.

Flanges such as indicated at 8, 9 and 10 are supported by side walls 2 and 3 and the end walls and are adapted for bearing against a deformable seal positioned in a suitable holder on the air intake or the outlet of the air conditioning arrangement in the cabin. It is to be understood that other appropriate means of fastening the filter to an air-conditioning outlet can also be provided.

The webs 5 and 6 of expanded metal are supported at their edges by webs of aluminium C sections which extend along the side walls and end walls and as shown at 11 and 12. The webs of expanded metal and are made rigid in the direction of air flow relative one to the other by a post 13. The post has at either end two flanges, as indicated by 14 and 15, each fitting tightly to opposite faces of one of the expanded metal webs.

A chemisorptive chamber 16 is defined between the two opposing expanded metal webs 5 and 6, side walls 2 and 3 and end walls. A means for recharging the chemisorptive chamber with a suitable chemisorptive medium may be provided and thus an aperture through either one of the end walls or through a side wall of the chemisorptive chamber with a closure can be provided.

Flanges 8, 9 and 10 fit tightly against the outlet of an airconditioning unit so as to provide a sealing against said unit. This sealing could be enhanced by the use of a gasket of a suitably deformable material.

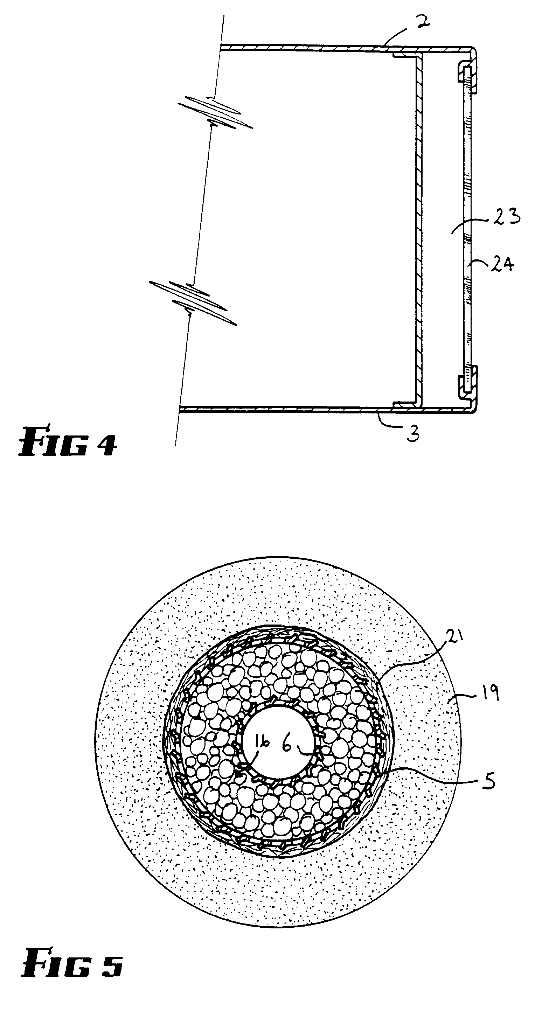

In some circumstances it may be desirable to partition the chemisorption chamber at one end as illustrated in FIG. 4 to form an indicator chamber 23. The end wall defining the indicator chamber includes a window 24, for viewing the contents of the indicator chamber. Thus for example an indicator can be housed in the indicator chamber that changes colour when the chemisorptive material is exhausted or is best replaced. One such indicator could be an activated aluminium impregnated with potassium permanganate. The indicator chamber is situated between the two expanded metal webs and is positioned so that air that passes through the airconditioning unit also passes through the indicator chamber. The indicator thus has the same exposure to air flow as does the remainder of the chemisorptive bed.

When fully assembled as shown in FIG. 3 the unit comprises a mechanical filter layer 19. Such a layer could be a fully reticulated flexible polyester polyurethane foam, such as sold under the trade name Meracell, and the grade sold as Me 080 (having a density of 28 Kg/m³ and 80 cells per 25 mm) is found to give an excellent result. The open pore structure allows for good flow-through of air without leading to too great a pressure drop.

Alternatively the mechanical layer could comprise of two layers. A first coarse layer may comprise a filter pad manufactured from gradual synthetic fibres made up in graduated layers, bonded and subsequently baked. A second mechanical filter layer is downstream of the said coarse filter layer and can be made of a similar material with a finer pore size.

Downstream of the mechanical filter is a layer with electret and electrostatic activity 21. The electrets act to convert uncharged particles into dipoles and the layer acts to filter out such dipoles. The electrostatic component of such a layer acts to filter out charged particles. A suitable medium for this layer is sold under the name of FILTRETE G (Trade Mark) by the 3M Company. The advantage of such a layer is its compactness and airflow properties to draw out electrically particles of small size without the need to have bulky charge inducing means, and then means to attract such charged particles.

Whilst a layer having both activities is shown, it may be desired to have the two activities separated, this later alternative however has the disadvantage of extra thickness.

A chemisorptive medium layer 22 is provided within the chemisorptive chamber 16. In one embodiment such chemisorptive material is provided by an activated alumina impregnated with potassium permanganate. The potassium permanganate content is 5% by volume and contains no more than 5 mg per cubic metre respirable dust.

Other absorptive media may also be used, and thus activated carbon can be used as an absorptive media. The chemisorptive chamber with non-granulated activated carbon does require a lining with a smaller pore size so that the activated carbon is not lost through the expanded metal webs.

In one form the activated carbon could be a granulated coconut shell based steam activated carbon impregnated with 7.5% potassium bromide. This activated carbon is granulated to a size with 90% of granules being between 4.76 to 2.38 mm, with an apparent density of 580 kg/m³.

Alternatively it may be desired to use other chemisorptive media, especially where a specific adsorptive requirement exists. The choice of chemisorptive medium is however, limited to some extent by the requirement to keep the reduction in airflow to a minimum.

In use then heavy dust and large particles are removed by coarse filter layer, finer dust is trapped by the fine filter layer. Particles down to 0.3 microns are trapped by the electret and electrostatic layer. These layers effectively remove particles of size unable to absorb to the absorptive medium and such particles as are likely to clog up the absorptive medium. The absorptive medium in this embodiment is able to absorb a large range of chemicals.

The expanded metal webs are made of aluminium panels and angle the air flow so as to maximise contact with the chemisorptive medium, to thereby increase the effective length of the flow path through the chemisorptive chamber and so that the residency time of air passing through the chamber is increased. The illustrations show expanded metal webs having the openings angled in the same direction, it may be desired to have the openings opened in opposite directions to further increase the residency time of air within the chemisorptive chamber.

Expanded metal webs are described as the means by which perforations are made in the two opposing walls within the flow passageway however angled perforations can be achieved in other ways, and other means may be provided as a means of increasing the residency time. Thus vane may be used to direct air into the chemisorptive chamber at angle to the overall airflow.

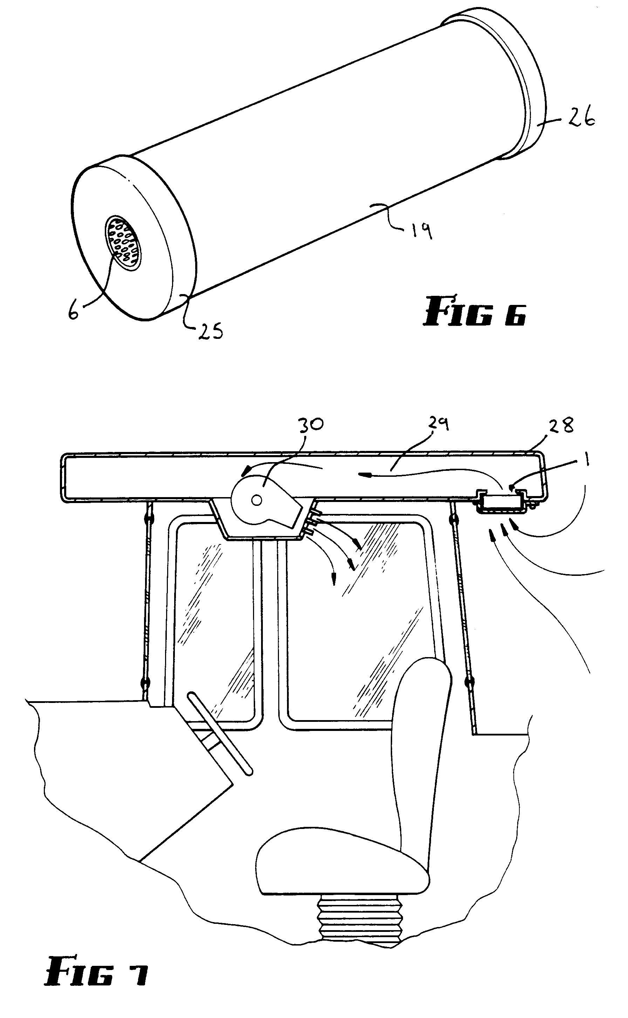

The second embodiment shown in FIGS. 5 and 6 comprises a generally cylindrical housing, in place of the rectangular housing of the first embodiment. The arrangement of the filter layers is generally the same as for the first embodiment except that each layer is arranged in the form of a cylinder instead of a flat layer. The air flow of the illustrated embodiment is from the outside of the cylinder inwards.

The housing of this filter includes two end caps shown at 25 and 26, flanges of each of the end caps fit over the cylindrical shaped mechanical filter to keep it in place. It is to be understood that the mechanical rigidity of the cylindrical expanded mesh layers is much greater that of a planar expanded metal mesh, and thus it is not necessary in the cylindrical form to provide a support post between the two mesh layer defining the chemisorptive chamber.

The position and placement of the replacement filters varies greatly, and thus whilst a specific filter shape is dictated by each type of fitting, one form of air-conditioning arrangement is illustrated for a better understanding of the invention. In the illustrated arrangement, the existing filter which usually is a paper filter fitting within a filter holder 27 located beneath the roof of a cabin. The filter holder is elongate and generally rectangular, and includes a cover that can be pivoted open, to allow for removal of the filter. Seals are provided between the cover and the remainder of the filter holder, so that on closure and air tight seal is effected, furthermore a seal is provided between the holder and the filter housing, so that any air flowing through the filter holder passes though the filter. In this embodiment air is pulled through the filter through a space 29 in the cabin roof, by fan 30, and into the cabin through vents 31.

It is desirable to have a filter to replace existing paper or other filters with filters that will absorb the large range of toxic or harmful substances that are sprayed, especially for agricultural purposes and it is found that according to this invention a sufficiently compact filter can be provided that suffices to do so, at least with selected compounds.

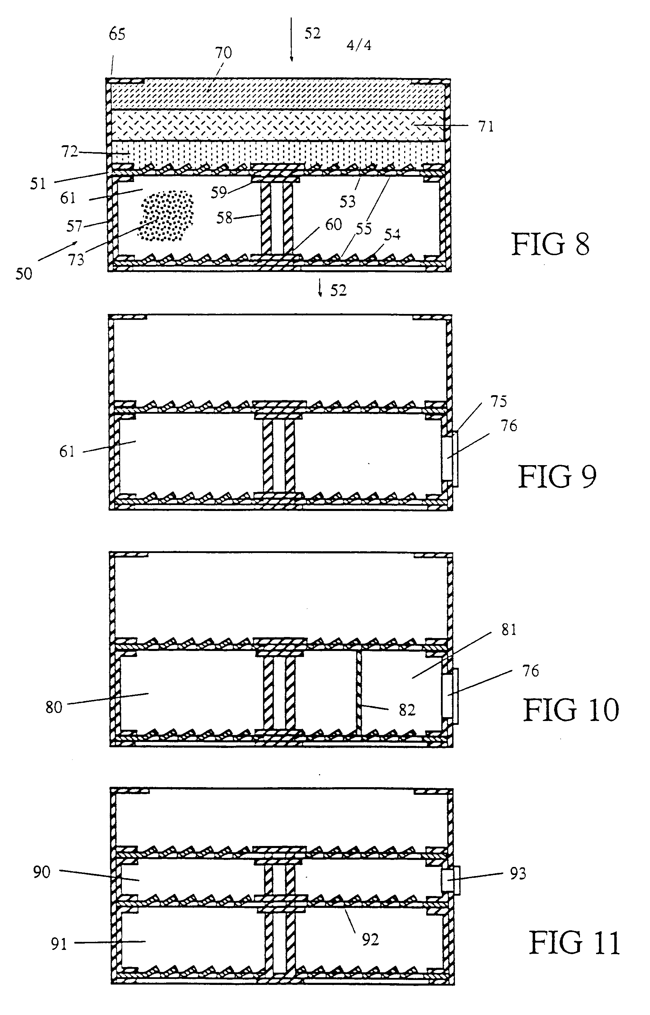

Now looking at the enbodiment shown in FIG. 8 the filter unit is particularly adapted as a replacement unit for a respirator mask. This embodiment includes a generally circular filter housing 50 including a cylindrical side wall 51 extending along the length of filter. The side walls providing an elongate sealed passageway of circular cross section for air flow in the direction shown by arrows 52. Supported within the air passageway are two webs of expanded metal 53 and 54 which have perforations 55 within such expanded webs permitting air flow therethrough. The housing in this embodiment is made of aluminum or plastics material.

Flanges 8 on side wall 51 is adapted for sealing the filter into an respirator mask. It is to be understood then other appropriate means of fastening the filter to respirator mask can also be provided.

The webs of expanded metal 53 and 54 are supported by the periphery on C section pieces shown at 57 and are made rigid in the direction of air flow relative one to the other by a post 58. The post has at either end two flanges and at one end of the post indicated by 59 and 60 each fitting tightly to opposite faces of an expanded metal web.

A chemisorptive chamber 61 is defined between the two opposing expanded metal webs 53 and 54 and the side walls 51.

Annular flanges 65 is adapted to fit tightly into a respirator mask so as to provide a sealing against the mask. This sealing could be enhanced by the use of a gasket of a suitably deformable material.

When fully assembled as shown in FIG. 8 the unit comprises a coarse mechanical filter layer 70. Such coarse layer may comprise a filter pad manufactured from graded synthetic fibres made up in graduated layers, bonded and subsequently baked. A second mechanical filter layer 71 is downstream of the said coarse filter layer and can be made of a similar material with a finer pore size.

Downstream of these two layers is a layer of electret and electrostatic activity 72. The electrets act to convert uncharged particles into dipoles and act filter out such dipoles. The electrostatic component of such a layer acts to filter out charged particles. A suitable medium for this layer is sold under the name of FILTRETE G (Trade Mark) by the 3M Company.

A chemisorptive medium layer 73 is provided within the chemisorptive chamber 61. In the embodiment shown such chemisorptive material is provided by an activated alumina impregnated with potassium permanganate. The potassium permanganate content is 5% by volume and contains no more than 5 mg per cubic metre respirable dust.

In use then heavy dust and large particles are removed by coarse filter layer 70, finer dust is trapped by the fine filter layer. Particles down to 0.3 microns are trapped by the electret and electrostatic layer. These layers effectively remove particles of size unable to absorp to the absorptive medium and such particles as are likely to clog up the absorptive medium. The absorptive medium in this embodiment is able to absorp a large range of chemicals and the following are examples.

| | |
|---|---|
| Acetaldehyde | CH₃CHO |
| Acetic acid | CH₃COOH |
| Acetylene | HCCH |
| Acrolein | CH₂CHCHO |
| Acrylonitrile | CH₂CHCN |
| 1,3-Butadiene | CH₂CHCHCH₂ |
| Butyric acid | CH₃CH₂CH₃COOH |
| Carbon disulfide | CS₂ |
| Chlorine dioxide | ClO₂ |
| Cresol | HOC₆H₄CH₃ |
| Diethylamine | (C₂H₅)₂NH |
| Dimethylamine | (CH₃)₂NH |
| Ethanol | C₂H₅OH |
| Ethylamine | C₂H₅NH₂ |
| Formaldehyde | HCHO |
| Formic acid | HCOOH |
| Freon 11 | CCl₃F |
| Hydrazine | H₂NNH₂ |
| Hydrogen chloride | HCl |
| Hydrogen cyanide | HCN |
| Hydrogen sulfide | H₂S |
| Indole | C₈H₇N |
| Isoprene | CH₂CCH₃CHCH₂ |
| Isoproponal | CH₃CHOHCH₃ |
| Methanol | CH₃OH |
| Methyl acrylate | CH₂CHCOOCH₃ |
| Methyl disulphide | CH₃SSCH₃ |
| Methyl ethyl ketone | CH₃COCH₂CH₃ |
| Methyl mercaptan | CH₃SH |
| Methyl sulphide | (CH₃)₂S |
| Methyl vinyl ketone | CH₃COCHCH₂ |
| Methylamine | CH₃NH₂ |
| Nitric oxide | NO |
| Nitrogen dioxide | NO₂ |
| Phenol | C₆H₅OH |
| Ozone | O₃ |
| Styrene | C₆H₅CHCH₂ |
| Sulfur dioxide | SO₂ |
| Sulfur trioxide | SO₃ |
| Trichloroethylene | CCl₂CHCl |
| Triethylamine | (C₂H₅)₃N |
| Trimethylamine | (CH₃)₃N |
| Vinyl chloride | CH₂CHCl |

The expanded metal webs are made of aluminium panels and are adapted to angle the air flow so as to maximise contact with the chemisorptive medium, and to increase length of the flow path through the chemisorptive chamber so that the residency time of air passing through the chamber is increased.

Whilst the absorption medium used in this embodiment includes an activated aluminium impregnated with potassium permanganate, other absorptive media can be used for specialised purposes. Thus activated carbon can be used as an absorptive media. The chemisorptive chamber however with activated carbon does require a lining with a smaller pore size so that the activated carbon is not lost through the expanded metal webs.

Expanded metal webs are described the means by which perforations are made in the two opposing walls within the flow passageway however perforations can be achieved in other ways.

The filter unit may alternatively be used in an air conditioning system for a motor vehicle such as an agricultural tractor or a mining vehicle or as discussed above may be used in a respiratory mask for personal use or a replaceable filter element for such a respiratory mask.

FIGURE 9 shows an alternative embodiment of filter unit housing according to this invention. In this embodiment the chemisorptive material chamber 61 includes an aperture 75 in the wall 2 into which is installed a window 76. This enables the contents of the chemisorptive chamber to be inspected easily. Also the filling of the chemisorptive chamber can be achieved by removal of the window 76 and filling the chemisorptive medium into the chemisorptive chamber through the aperture 75.

It will be realised that by means of the window 76 it will be possible to view any changes in colour in the chemisorptive medium which may indicate the medium should be replaced.

In FIG. 10 an alternative embodiment is shown. In this embodiment the chemisorptive medium chamber is divided into a primary chamber 80 and a secondary chamber 81 by means of a divider 82 extending between the two webs of expanded metal 53 and 54. The secondary chamber 81 provides an indicator region into which an alternative chemisorptive material can be placed. This can be chemisorptive material in the indicator chamber 81 can be adapted to show a colour change before the chemisorptive medium in the main chamber 80 is exhausted and hence provide an early indication of the necessity to change the filter.

A still further embodiment as shown in FIG. 11 in which the chemisorptive chamber is divided into two chambers by means of a further perforated wed 92 so that an indicator chamber 90 is upstream of a main chemisorptive chamber 91. The window 93 opens into the indicator chamber 90 thereby enabling early viewing of any change in colour indicating an expiry of the chemisorptive medium.

Various features of the invention have been particularly shown and described in connection with the illustrated embodiments of the invention, however, it must be understood that these particular arrangements merely illustrate and it is to be realised that the invention is not to be limited thereto but can include various modifications covered by the appended claims.

## Claims

1. An air filter for filtering air passing through a flow path, including the following sequential filtering layers in the flow path, a mechanical filter (19), a combined electrostatic and an electret medium (21) and a chemisorptive medium (22), the layers being so arranged that air passing through the air filter passes through each of the filtering layers.

2. An air filter for filtering air passing through a flow path as in claim 1 wherein the chemisorptive medium (22) is contained within a chemisorptive medium chamber (16) between two opposing walls (5, 6), the walls being lateral to the flow path and being perforated (7) to allow for through-flow of air whilst retaining the chemisorptive material within the chamber.

3. An air filter for filtering air passing through a flow path as in claim 2 wherein the perforations (7) in the two opposing walls (5, 6) are set at an angle to the throughflow of air.

4. An air filter for filtering air passing through a flow path as in claim 2 wherein the perforations (7) in the opposing walls (5, 6) are provided by a web of expanded metal.

5. An air filter for filtering air passing through a flow path as in claim 2 wherein the chemisorptive medium chamber (16) includes means (13) to inhibit movement of the two opposing walls in the direction of airflow.

6. An air filter for filtering air passing through a flow path as in claim 5 wherein the means to inhibit movement is provided by a post (13) extending between the two opposing walls (5, 6) and having a flanged (14, 15) fixed to the post and bracing against both faces of each surface of the two opposing walls so as to maintain a fixed distance between the two walls.

7. An air filter for filtering air passing through a flow path as in claim 2 wherein there is further provided a window (24) in a casing (1) that defines within it the chemisorptive medium chamber (16), and where the chemisorptive medium (22) within the chamber includes an indicator which provides a visual display so as to indicate the extent of depletion of the capacity of the medium.

8. An air filter for filtering air passing through a flow path as in claim 7 wherein the visual display is a material that undergoes a colour change which colour change is detectable at least at a predetermined level to indicate the remaining capacity of the exhaustible medium.

9. An air filter for filtering air passing through a flow path as in claim 2 wherein the chemisorptive medium chamber comprises an indicator region (81, 90), which indicator region includes an indicator exhaustible medium and an indicator indicative of the capacity of the indicator exhaustible medium, and an active region (80, 91) which active region includes an chemisorptive medium, a window (76, 93) in a casing for the chamber being provided for visual inspection of the indicator exhaustible medium, an indicator being provided to show the capacity of the indicator exhaustible medium, and the capacity of the active exhaustible medium being greater than that of the chemisorptive medium.

10. An air filter for filtering air passing through a flow path as in claim 9 wherein the indicator exhaustible medium is separate from the active region (80) and exposed to the airflow through the filter, and adjacent to the filter casing and the window (76).

11. An air filter for filtering air passing through a flow path as in claim 9 wherein the indicator region (90) comprises a layer extending across a flowpath and being positioned upstream of the active region (91).

## Patentansprüche

1. Luftfilter zum Filtern von durch eine Strömungsbahn strömender Luft, das die folgenden aufeinanderfolgenden Filterschichten in der Strömungsbahn umfaßt: ein mechanisches Filter (19), ein kombiniertes elektrostatisches und Elektretmedium (21), und ein Chemisorptionsmedium (22), wobei die Schichten so angeordnet sind, daß die durch das Luftfilter strömende Luft durch jede der Filterschichten strömt.

2. Luftfilter zum Filtern von durch eine Strömungsbahn strömender Luft, gemäß Anspruch 1, wobei das Chemisorptionsmedium (22) in einer Chemisorptionsmedium-Kammer (16) zwischen zwei einander gegenüberliegenden Wänden (5, 6) enthalten ist, die senkrecht zu der Strömungsbahn angeordnet sind, und mit Perforationen (7) versehen sind, damit die Luft hindurchströmen kann, während das Chemisorptionsmaterial in der Kammer zurückgehalten wird.

3. Luftfilter zum Filtern von durch eine Strömungsbahn strömender Luft, gemäß Anspruch 2, wobei die Perforationen (7) in den zwei einander gegenüberliegenden Wänden (5, 6) unter einem Winkel bezüglich der Strömungsrichtung der Luft angeordnet sind.

4. Luftfilter zum Filtern von durch eine Strömungsbahn strömender Luft, gemäß Anspruch 2, wobei die Perforationen (7) in den einander gegenüberliegenden Wänden (5, 6) von einem Netz aus Streckmetall gebildet werden.

5. Luftfilter zum Filtern von durch eine Strömungsbahn strömender Luft, gemäß Anspruch 2, wobei die Chemisorptionsmedium-Kammer (16) Mittel (13) umfaßt, um die Bewegung der zwei einander gegenüberliegenden Wände in der Richtung der Luftströmung zu hemmen.

6. Luftfilter zum Filtern von durch eine Strömungsbahn strömender Luft, gemäß Anspruch 5, wobei die Mittel zum Hemmen der Bewegung von einem Pfosten (13) gebildet werden, der sich zwischen den zwei einander gegenüberliegenden Wänden (5, 6) erstreckt, und einen Flansch (14, 15) hat, der an dem Pfosten befestigt ist, und eine Verstrebung gegen beide Seiten der einander gegenüberliegenden Wände bewirkt, so daß ein fester Abstand zwischen den zwei Wänden aufrechterhalten wird.

7. Luftfilter zum Filtern von durch eine Strömungsbahn strömender Luft, gemäß Anspruch 2, wobei weiterhin in einem Gehäuse (1), das die Chemisorptionsmedium-Kammer (16) definiert, ein Fenster (24) vorgesehen ist, und wobei das Chemisorptionsmedium (22) in der Kammer einen Indikator umfaßt, der eine optische Anzeige bewirkt, so daß das Ausmaß der Erschöpfung der Kapazität des Mediums angezeigt wird.

8. Luftfilter zum Filtern von durch eine Strömungsbahn strömender Luft, gemäß Anspruch 7, wobei die optische Anzeige ein Material ist, das eine Farbänderung erfährt, die mindestens bei einem vorgegebenen Niveau erfaßbar ist, um die restliche Kapazität des erschöpfbaren Mediums anzuzeigen.

9. Luftfilter zum Filtern von durch eine Strömungsbahn strömender Luft, gemäß Anspruch 2, wobei die Chemisorptionsmedium-Kammer ein Indikatorgebiet (81, 90) aufweist, das ein erschöpfbares Indikatormedium und einen die Kapazität des erschöpfbaren Indikatormediums anzeigenden Indikator umfaßt, und ein aktives Gebiet (80, 91) aufweist, das ein Chemisorptionsmedium umfaßt, wobei ein Fenster (76, 93) in einem Gehäuse der Kammer vorgesehen ist zur visuellen Kontrolle des erschöpfbaren Indikatormediums, und ein Indikator vorgesehen ist, um die Kapazität des erschöpfbaren Indikatormediums anzuzeigen, wobei die Kapazität des wirksamen Chemisorptionsmediums größer als die Kapazität des erschöpfbaren Indikatormediums ist.

10. Luftfilter zum Filtern von durch eine Strömungsbahn strömender Luft, gemäß Anspruch 9, wobei das erschöpfbare Indikatormedium von dem aktiven Gebiet (80) getrennt ist und der durch das Filter strömenden Luft ausgesetzt ist, und an das Filtergehäuse und das Fenster (76) angrenzt.

11. Luftfilter zum Filtern von durch eine Strömungsbahn strömender Luft, gemäß Anspruch 9, wobei das Indikatorgebiet (90) eine Schicht aufweist, die sich quer zu einer Strömungsbahn erstreckt und stromaufwärts von dem aktiven Gebiet (91) gelegen ist.

## Revendications

1. Filtre à air pour filtrer l'air passant à travers une voie d'écoulement, comprenant les couches filtrantes successives suivantes situées dans la voie d'écoulement, un filtre mécanique (19), un milieu combiné électrostatique et à électret (21) et un milieu d'adsorption chimique (22), les couches étant agencées de manière à ce que l'air passant à travers le filtre à air traverse chacune des couches filtrantes.

2. Filtre à air pour filtrer l'air passant à travers une voie d'écoulement selon la revendication 1, dans lequel le milieu d'adsorption chimique (22) est contenu dans une chambre pour milieu d'adsorption chimique (16) entre deux parois opposées (5, 6), les parois étant latérales à la voie d'écoulement et étant perforées (7) pour permettre le passage de l'air tout en retenant le matériau d'adsorption chimique à l'intérieur de la chambre.

3. Filtre à air pour filtrer l'air passant à travers une voie d'écoulement selon la revendication 2, dans lequel les perforations (7) dans les deux parois opposées (5, 6) sont orientées suivant un angle par rapport à la traversée de l'air.

4. Filtre à air pour filtrer l'air passant à travers une voie d'écoulement selon la revendication 2, dans lequel les perforations (7) dans les parois opposées (5, 6) sont fournies par une bande de métal déployé.

5. Filtre à air pour filtrer l'air passant à travers une voie d'écoulement selon la revendication 2, dans lequel la chambre pour milieu d'adsorption chimique (16) comprend un moyen (13) pour empêcher le mouvement des deux parois opposées dans la direction du courant d'air.

6. Filtre à air pour filtrer l'air passant à travers une voie d'écoulement selon la revendication 5, dans lequel le moyen pour empêcher le mouvement est fourni par un poteau (13) s'étendant entre les deux parois opposées (5, 6) et est pourvu d'une bride (14, 15) fixée sur le poteau et consolidant les deux faces de chaque surface des deux parois opposées de manière à maintenir une distance fixe entre les deux parois.

7. Filtre à air pour filtrer l'air passant à travers une voie d'écoulement selon la revendication 2, dans lequel on prévoit, en outre, une fenêtre (24) dans un boîtier (1) dont l'intérieur définit la chambre pour le milieu d'adsorption chimique (16), et où le milieu d'adsorption chimique (22) dans la chambre inclut un indicateur qui fournit un affichage visuel de manière à indiquer le degré d'appauvrissement de la capacité du milieu.

8. Filtre à air pour filtrer l'air passant à travers une voie d'écoulement selon la revendication 7, dans lequel l'affichage visuel est un matériau qui subit un changement de couleur, lequel changement de couleur peut être détecté au moins à un niveau prédéterminé pour indiquer la capacité restante du milieu susceptible de s'épuiser.

9. Filtre à air pour filtrer l'air passant à travers une voie d'écoulement selon la revendication 2, dans lequel la chambre pour le milieu d'adsorption chimique comprend une région indicatrice (81, 90), laquelle région indicatrice comprend un milieu indicateur susceptible de s'épuiser et un indicateur indiquant la capacité du milieu indicateur susceptible de s'épuiser, et une région active (80, 91), laquelle région active comprend un milieu d'adsorption chimique, une fenêtre (76, 93) dans un boîtier servant pour la chambre étant prévue pour I'inspection visuelle du milieu indicateur susceptible de s'épuiser, un indicateur étant prévu pour montrer la capacité du milieu indicateur susceptible de s'épuiser, et la capacité du milieu actif susceptible de s'épuiser étant supérieure à celle du milieu d'adsorption chimique.

10. Filtre à air pour filtrer l'air passant à travers une voie d'écoulement selon la revendication 9, dans lequel le milieu indicateur susceptible de s'épuiser est séparé de la région active (80) et exposé au courant d'air traversant le filtre, et est adjacent au boîtier du filtre et à la fenêtre (76).

11. Filtre à air pour filtrer l'air passant à travers une voie d'écoulement selon la revendication 9, dans lequel la région indicatrice (90) comprend une couche s'étendant en travers d'une voie d'écoulement et placée en amont de la région active (91).
